## Europäisches Patentamt

## European Patent Office

## Office européen des brevets

(19)

(11) **EP 0 957 352 B1**

(12) **FASCICULE DE BREVET EUROPEEN**

(45) Date de publication et mention
de la délivrance du brevet:
**10.11.2004 Bulletin 2004/46**

(51) Int Cl.⁷: **G01N 11/14**, G01M 9/00

(21) Numéro de dépôt: **99401003.1**

(22) Date de dépôt: **23.04.1999**

(54) **Dispositif tournant pour la mesure des caractéristiques aérodynamiques d'une paroi et sa méthode**

Drehende Vorrichtung und Verfahren zur Bestimmung der aerodynamischen Eigenschaften einer Wandung

Rotating device and method for the determination of the aerodynamic properties of a wall surface

(84) Etats contractants désignés:
**DE GB IT**

(30) Priorité: **11.05.1998 FR 9806504**

(43) Date de publication de la demande:
**17.11.1999 Bulletin 1999/46**

(73) Titulaire: **Institut Français du Pétrole**
**92852 Rueil-Malmaison Cedex (FR)**

(72) Inventeur: **Charron, Yves**
**91310 Longpont-sur-Orge (FR)**

(56) Documents cités:
**US-A- 4 485 450      US-A- 4 643 021**
**US-A- 4 821 564      US-A- 5 301 541**

**Description**

La présente invention concerne un dispositif et une méthode permettant de déterminer les propriétés ou les caractéristiques aérodynamiques d'une paroi en contact avec un fluide en écoulement turbulent.

Sous le terme « paroi », on entend dans la suite de la description, la partie servant au confinement d'un fluide, et directement en contact avec l'écoulement. Ce pourra être, par exemple, la partie interne d'un canal non revêtu intérieurement, un revêtement ou encore un fluide tiers recouvrant la partie interne d'un canal.

Par propriétés aérodynamiques on entend, par exemple, dans le cas d'un canal ou d'une conduite, la perte de charge ou perte de pression occasionnée par l'écoulement d'un fluide le long de la paroi. Dans le cas plus général d'une plaque ou d'une paroi, on considère la force de traînée occasionnée par l'écoulement le long de cette paroi.

Ces pertes de charge ou force de traînée, dépendent non seulement des conditions d'écoulement, mais également des caractéristiques de la paroi. La paroi sera caractérisée selon le cas par son état de surface, par exemple des aspérités, sa forme géométrique telle que des stries, ou encore par la présence d'un film la recouvrant ou du matériau la constituant.

Les propriétés ou caractéristiques aérodynamiques seront établies par rapport à celles d'une paroi lisse d'un matériau standard, tel qu'un acier, pour laquelle le coefficient de friction en écoulement turbulent dans une conduite circulaire rectiligne est donné par la formule $f=0.316/Re^{0.25}$ avec Re le nombre de Reynolds de cet écoulement. Ainsi, dans le cas d'une paroi présentant un facteur de friction plus élevé que celui correspondant à une paroi lisse, (cas par exemple des aspérités avec une distribution spatiale quasi aléatoire à la surface de la paroi), la paroi sera caractérisée par une rugosité hydraulique équivalente. Dans le cas d'une paroi présentant un facteur de friction plus faible que celui correspondant à une paroi lisse, (cas par exemple des stries avec une géométrie organisée à fleur de paroi ou d'un matériau particulier), la la paroi sera caractérisée par une valeur d'efficacité hydraulique, définie plus loin dans la description.

La présente invention s'applique avantageusement dans le domaine du transport du gaz naturel sous pression sur de longues distances dans des gazoducs. Les pertes de charge peuvent en effet atteindre plusieurs dizaines de bars, et il s'avère alors nécessaire de recomprimer le gaz à des intervalles réguliers, par exemple à terre, en utilisant des stations de recompression plus ou moins rapprochées, ou de plus ou moins grande puissance, en fonction des pertes de charge ou, par exemple en mer, en utilisant des canalisations de plus ou moins grand diamètre selon les pertes de charge. De telles stations ou conduites contribuent à augmenter les coûts de production. Savoir évaluer les caractéristiques aérodynamiques de l'état de surface d'un pipe de transport permet avantageusement de choisir le matériau formant sa paroi interne ou d'optimiser les caractéristiques de sa géométrie de surface afin de minimiser les pertes de charge pouvant être induites.

L'art antérieur décrit différentes façons mises en oeuvre pour évaluer les pertes de charge d'un gaz sous pression en écoulement turbulent dans une conduite.

L'une de ces méthodes consiste à stabiliser un écoulement sur une longueur donnée, et ensuite à mesurer en aval la perte de charge, par exemple entre deux points de la conduite, les points de mesure étant suffisamment éloignés l'un de l'autre. Ceci nécessite des longueurs de conduite importantes, principalement avec des nombres de Reynolds élevés, et pour des conduites de grand diamètre une mise en oeuvre particulièrement complexe (cas par exemple des essais hydrauliques sur des stries), des moyens d'essai importants (débit et pression élevés), des temps d'essai relativement longs et par conséquent des coûts élevés.

Les viscosimètres de l'art antérieur, par exemple présentés par les documents US 5 301 541, US 4 485 450, US 4 821 564 et US 4 643 021, sont conçus dans un but différent. Ils sont en effet utilisés pour déterminer les caractéristiques d'un fluide en écoulement laminaire et nullement les propriétés aérodynamiques d'une paroi en contact avec un fluide en régime turbulent.

La présente invention concerne un dispositif permettant de déterminer des caractéristiques aérodynamiques d'une paroi . Le dispositif comporte:

- un arbre de rotation,
- un tambour monté sur ledit arbre de rotation,
- une enceinte à l'intérieur de laquelle se trouve disposée ledit tambour, de manière à définir un espace, et au moins une zone d'essai, munie de ladite au moins une paroi à tester,
- au moins un conduit d'introduction d'un fluide test communiquant avec ladite zone d'essai,
- des dispositifs permettant de déterminer un paramètre représentatif du facteur de friction du fluide dans la zone d'essai.

Il est caractérisé en ce que

- ladite zone d'essai a une largeur 'l' ou largeur d'entrefer déterminée, pour une vitesse de rotation du tambour donnée et un fluide test ayant des caractéristiques connues (viscosité, densité..), de manière à ce que ledit fluide se présente en régime turbulent au niveau de la ou des parois à tester, le régime turbulent correspondant à une valeur de Reynolds Re donnée.

Le tambour est cylindrique sur au moins une partie de sa hauteur.

Le dispositif peut comporter des moyens d'étanchéité qui sont adaptés et disposés de manière à délimiter trois zones, une première zone d'essai haute pression et deux zones basse pression, ces zones étant séparées « physiquement ». La séparation « physique » peut être réalisée à l'aide des moyens d'étanchéïté.

Au moins un des conduits d'introduction du fluide test peut être disposé au niveau des moyens d'étanchéité.

Selon une autre variante de réalisation, les moyens d'étanchéité peuvent être disposés au niveau de l'arbre de rotation.

Le dispositif peut être équipé de moyens ($C_P$, $C_T$) permettant de déterminer la pression et/ ou la température au niveau de la zone d'essai.

Il peut aussi comporter des tubes de pitot, de manière à déterminer la vitesse locale du fluide et en déduire le profil de vitesse à l'intérieur de la zone annulaire.

Selon un mode de réalisation, le dispositif comporte un système de réchauffement et/ou de refroidissement, par exemple.

L'invention concerne aussi une méthode permettant de déterminer des caractéristiques aérodynamiques d'une paroi . Elle est caractérisée en ce que :

- on introduit un fluide test dans une zone d'essai comportant la ou les parois à tester, ladite zone d'essai étant située entre une enceinte fixe et un élément mobile,
- on met en rotation ledit élément mobile,
- on choisit la pression et la vitesse de rotation dudit élément mobile de façon à obtenir le nombre de Reynolds souhaité,
- on détermine les pertes dissipatives à l'intérieur de ladite enceinte,
- on détermine la contrainte de cisaillement ainsi que le facteur de friction,
- on compare la valeur de ladite contrainte de cisaillement ou celle du facteur de friction par rapport à un ensemble de données établies à partir de parois étalons pour une même valeur du nombre de Reynolds que celle choisie pour la caractérisation, et
- on détermine la valeur de la caractéristique hydraulique telle que la rugosité hydraulique $\varepsilon$ ou l'efficacité hydraulique de la ou des parois testées.

On peut déterminer les pertes dissipatives à l'intérieur de ladite enceinte au niveau d'une zone d'essai, délimitée par des moyens d'étanchéité disposés de manière à délimiter trois zones, une première zone d'essai et deux zones.

Le dispositif et la méthode trouvent notamment une application pour l'étude de parois d'une conduite destinée au transport d'un gaz sous pression.

Le dispositif selon l'invention offre différents avantages dont certains sont donnés à titre illustratif et nullement limitatif. En mesurant les pertes dissipatives :

- dans le cas d'une paroi rugueuse en contact direct avec l'écoulement, il est possible de déterminer la valeur du facteur de friction (paramètre dépendant du nombre de Reynolds) et celle de la rugosité hydraulique équivalente (absolue ou relative, paramètre indépendant du nombre de Reynolds),
- dans le cas d'une paroi rugueuse recouverte d'un élément filmogène, il est possible de déterminer la valeur du facteur de friction (paramètre dépendant du nombre de Reynolds) et celle de la rugosité hydraulique équivalente,
- dans le cas d'une paroi striée, il est possible de déterminer la valeur du facteur de friction (paramètre dépendant du nombre de Reynolds) et celle de l'efficacité hydraulique de la strie (paramètre défini ci-dessous)
- dans le cas d'une paroi constituée d'un matériau particulier, il est possible de déterminer la valeur du facteur de friction (paramètre dépendant du nombre de Reynolds) et celle de l'efficacité hydraulique du matériau tel que défini ci-dessus.

D'autres avantages et caractéristiques du dispositif selon l'invention seront mieux compris à la lecture de la description ci-après d'un exemple non limitatif en se référant aux figures annexées où

- la figure 1 représente une vue générale d'un exemple de réalisation d'un dispositif adapté pour évaluer les propriétés hydrauliques d'une paroi telle que définie au début de la description,
- la figure 2 montre en détail les moyens d'étanchéité du dispositif de la figure 1, et

- la figure 3 schématise une autre variante de dispositif.

Le principe de fonctionnement de la méthode et du dispositif associé, consiste à faire tourner un tambour à l'intérieur d'une enceinte, de manière à générer un écoulement fortement turbulent, par exemple ayant un nombre de Reynolds supérieur à $10^6$, et simuler les écoulements habituellement présents dans les gazoducs. Le tambour et l'enceinte étant en déplacement relatif l'un par rapport à l'autre (rotation), on injecte ensuite, ou simultanément, un fluide test sous une pression élevée. Les frottements générés par cette rotation vont engendrer un couple sur l'arbre de rotation du dispositif. On mesure ce couple pour déterminer les propriétés aérodynamiques des revêtements ou des parois en contact avec le gaz test.

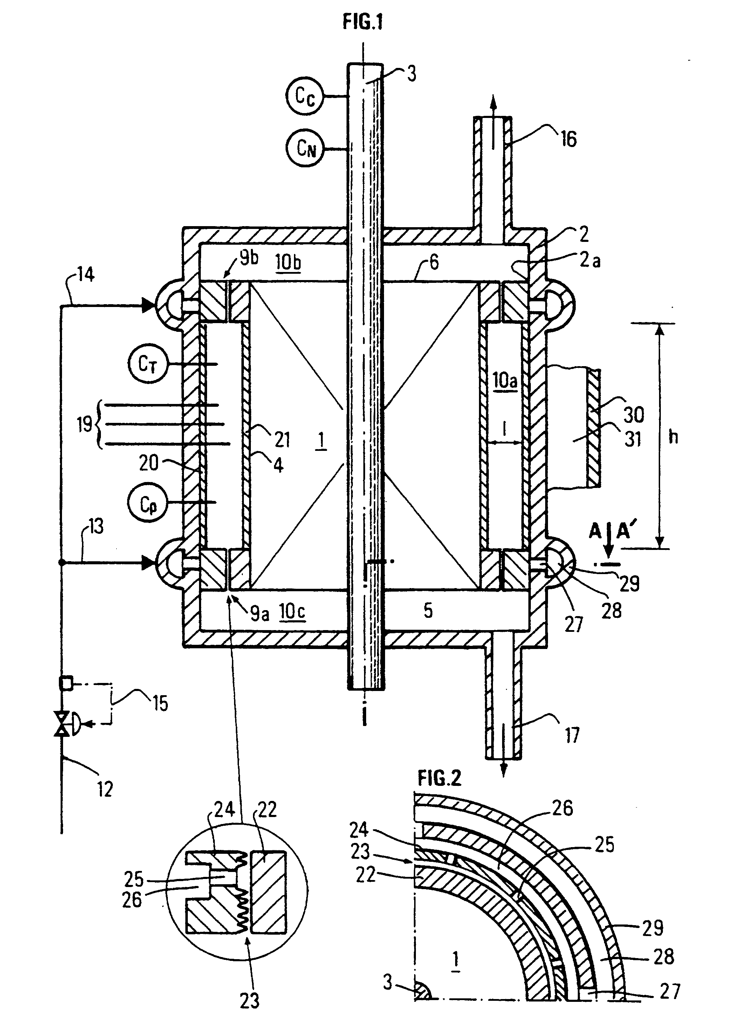

La figure 1 représente un dispositif permettant d'évaluer les propriétés hydrauliques de la paroi d'une conduite destinée à transporter un gaz sous pression. A cet effet, on utilise un fluide dit test dont on connaît les propriétés hydrauliques, telle que la viscosité et thermodynamiques, telles que sa masse moléculaire, son facteur de compressibilité, afin de déterminer, en régime turbulent, le facteur de friction, et/ou la rugosité hydraulique équivalente ou l'efficacité hydraulique de la paroi.

Le dispositif peut être disposé de manière verticale ou dans n'importe quelle position.

Il comporte, par exemple, un tambour cylindrique 1 disposé à l'intérieur d'une enceinte externe 2, cette dernière étant elle-même cylindrique. Le tambour est monté sur un arbre de rotation 3 associé à des moyens de mise en rotation ( non représentés sur la figure) et équipé par exemple de moyens de mesure $C_N$ de la vitesse de rotation N.

L'arbre de rotation 3 est aussi associé à des moyens $C_C$ permettant de mesurer l'énergie dissipée, par exemple un couplemètre.

Le tambour 1 comporte une paroi cylindrique 4 ayant une direction longitudinale parallèle à l'axe de l'arbre de rotation 3, et deux bases 5, 6 dénommées ci-après parois circulaires, qui sont sensiblement perpendiculaires à l'axe de l'arbre de rotation.

Entre le tambour et la paroi interne 2a de l'enceinte, existe un espace 10 ayant une forme annulaire dans cet exemple de réalisation. Cet espace est composé de trois zones référencées respectivement 10a (zone d'essai à haute pression), 10b et 10c (zones de basse pression). Les zones de pression différentes sont séparées « physiquement » à l'aide de moyens d'étanchéité 9a et 9b, disposés, dans cet exemple de mise en ceuvre, au niveau des deux extrémités de la paroi cylindrique 4.

Ainsi, la zone 10a ou zone d'essai, correspond à l'espace annulaire compris entre les parois interne 2a de l'enceinte et externe du tambour, et les moyens d'étanchéité 9a, 9b. La vue de détail correspond à des moyens d'étanchéité disposés par exemple dans la partie inférieure du dispositif, les moyens d'étanchéité 9b étant symétriques des moyens 9a.

Un exemple de structure de ces moyens est détaillé sur la figure 2.

La largeur de l'entrefer «l» de la zone d'essai 10a, est délimitée par les rayons r du tambour, et R de l'enceinte. Ces derniers sont choisis pour obtenir une largeur de l'entrefer « l » capable de générer le régime turbulent souhaité, (par conséquent le nombre de Reynolds Re donné), compte tenu des caractéristiques du fluide test (telles que sa densité, $\rho$ et sa viscosité absolue, $\mu$), et de sa vitesse équivalente d'écoulement, Va, dans la zone annulaire. Cette vitesse est elle-même dépendante de la valeur du rayon et de la vitesse de rotation du tambour.

Le rayon hydraulique, Rh, de la zone d'essai est déterminé selon une façon connue de l'homme du métier pour un canal non circulaire, en divisant la surface s de la zone annulaire de la zone d'essai par son périmètre p. Dans le cas d'une zone annulaire relativement allongée, par exemple avec une hauteur d'entrefer, partie de la paroi 4 qui est comprise entre deux moyens d'étanchéité 9a et 9b, plus de 10 fois supérieure à la largeur, le rayon hydraulique Rh pourra être assimilé à la moitié de la largeur de l'entrefer. Le diamètre hydraulique, Dh, est défini comme étant le double du rayon hydraulique.

La vitesse équivalente d'écoulement du fluide, Va, dans la zone d'essai, est déterminée en prenant la moyenne arithmétique des vitesses périphériques des parois de tambour et d'enceinte (cette dernière étant nulle). Elle est déterminée à partir de la vitesse de rotation N qui est mesurée à l'aide du dispositif $C_N$.

Ainsi la largeur d'entrefer l sera déterminée, à partir du rayon hydraulique par la relation suivante : «l/2» $\cong$ Rh $= (1/4/Va)^*(Re^*\mu/\rho)$, Re étant la valeur du nombre de nombre de Reynolds que l'on cherche à simuler.

Les zones 10b et 10c correspondent aux espaces compris entre les bases 6, 5 du tambour et la paroi interne 2a de l'enceinte 2. La largeur des zones 10b et 10c, c'est-à-dire la plus petite longueur de la zone, est du même ordre de grandeur que la valeur de l'entrefer « l ».

Sur la figure 1, les parois à tester sont situées sur la paroi interne 2a de l'enceinte 2, au niveau de la zone annulaire 10a et la paroi externe du tambour 1. Elles sont formées par des chemises 20 et 21, ayant une longueur lc correspondant sensiblement à la hauteur du tambour diminuée de la longueur des moyens d'étanchéité 9a ou 9b. Les parois peuvent présenter l'une des caractéristiques mentionnées au début de la description.

Sans sortir du cadre de l'invention, il serait possible de tester une seule de ces deux parois, la seconde paroi restant inchangée au cours des essais de la première paroi

L'enceinte 2 est pourvue d'un conduit 12 d'alimentation en gaz, se divisant en deux conduits, 13 et 14. Ces deux conduits permettent l'introduction du fluide test initialement et en cours d'essai d'envoyer du fluide test de façon à compenser les fuites de gaz se produisant au niveau des moyens ou systèmes d'étanchéité 9a, 9b. Le conduit 12 d'arrivée du gaz sous pression peut être équipé d'un dispositif, 15, de contrôle de pression au moyen d'une vanne.

Dans le cas de systèmes d'étanchéité par labyrinthes connus de l'Homme du métier et décrits dans la vue de détail et sur la figure 2, l'alimentation en fluide test par les conduits 13 et 14 peut se faire directement au niveau des labyrinthes de telle façon qu'aucune fuite ne se produise au niveau de la zone d'essai. En procédant de cette manière, l'écoulement en régime turbulent à l'intérieur de la zone d'essai 10a n'est pas perturbé.

L'enceinte est aussi pourvue de conduits d'évacuation 16 et 17 disposés au niveau des zones 10b et 10c. La totalité du gaz sortant des systèmes d'étanchéité est ainsi évacuée de façon à maintenir la pression aux niveaux des zones 10b et 10c la plus basse possible. Cette pression sera de préférence aussi voisine que possible de la pression atmosphérique. La pression dans les zones 10b et 10c est déterminée essentiellement par le diamètre des conduits 16 et 17. Elle peut par ailleurs être maintenue en dessous de la pression atmosphérique par l'utilisation d'un système d'extraction, connu de l'homme du métier, monté en aval des conduits 16 et 17 et non représenté.

Des capteurs de pression $C_P$ et de température $C_T$ sont disposés au niveau de la zone d'essai 10a de façon à pouvoir contrôler la température et la pression du fluide test sous pression en régime turbulent.

L'étanchéité entre le tambour et l'enceinte pourra être assurée à l'aide de dispositifs connus de l'homme du métier, par exemple des étanchéité à labyrinthes, à film d'huile, à bagues ou constituées de garnitures sèches.

Les caractéristiques aérodynamiques d'une paroi sont déterminées à partir des pertes dissipatives dans la zone d'essai 10a. Ces pertes dissipatives sont par exemple déduites à partir d'une mesure de la puissance transmise ou de mesures de couple C transmis et de la vitesse N de rotation, considérées au niveau de l'arbre 3 entraînant le tambour 1.

Avantageusement le dispositif comporte des systèmes de réchauffement et / ou de refroidissement externe et/ou interne de façon à permettre un contrôle de la température du fluide dans la zone d'essai.

Par exemple sur la figure 1, ce système est formé d'une paroi 30 qui entoure l'enceinte 2 de manière à former un espace annulaire 31. L'espace annulaire communique avec une source auxiliaire contenant un fluide de réchauffement ou de refroidissement.

Le refroidissement externe peut être réalisé par exemple à l'aide d'un circuit d'eau, ou encore par des moyens de ventilation.

Le refroidissement peut aussi être effectué de manière interne. Pour cela un fluide peut circuler à l'intérieur de l'arbre de rotation, et à l'intérieur du tambour, ce dernier étant adapté en conséquence.

Dans toutes les réalisations de dispositif, il sera possible de disposer des capteurs de température de façon à contrôler le système de refroidissement.

La figure 2 détaille les moyens d'étanchéité correspondant au détail référencé 9a.

La section est prise selon la coupe A-A' du dispositif de la figure 1. Ces moyens comportent une partie mobile 22 montée sur la paroi du tambour, un canal 23, une partie fixe 24 solidaire ou fixée à la paroi fixe 2 de l'enceinte. La partie fixe 24 est pourvue de plusieurs orifices de distribution 25 et de répartition du fluide test, une goulotte annulaire 26 communiquant avec ces orifices.

La paroi de l'enceinte 2 est pourvue d'orifices 27 communiquant d'une part avec la goulotte annulaire 26 et avec un canal 28 qui va permettre d'introduire le fluide test. La référence 29 désigne un renflement de la paroi de l'enceinte.

Les étanchéités détaillées en 9a sont adaptées pour être disposées dans la partie inférieure du dispositif. Au niveau de la partie supérieure les étanchéités de type 9b présenteront une forme symétrique.

Un des moyens de mise en oeuvre du dispositif et du procédé permettant de caractériser les propriétés aérodynamiques d'une paroi peut comporter les étapes suivantes :

**Etapes d'étalonnage et de mesure :**

- on monte la ou les parois à tester, par exemple, la chemise référencée 21 sur la paroi externe cylindrique du tambour 1 et la chemise référencée 20 sur paroi intérieure de l'enceinte 2,
- on introduit un gaz avec une composition connue et à la pression requise pour satisfaire les conditions d'écoulement, de manière à obtenir un écoulement ayant le nombre de Reynolds Re souhaité,
- simultanément on met le tambour en rotation à la vitesse requise pour satisfaire les conditions d'écoulement.

# EP 0 957 352 B1

## Etalonnage du dispositif à partir de caractéristiques hydrauliques connues de parois, ou parois étalons.

Les parois étalons seront constituées, de préférence, d'un acier inoxydable non revêtu, sur lequel ont été formées des aspérités d'amplitude moyenne $\varepsilon$

La température et la pression du gaz test dans l'espace annulaire de mesure sont mesurées par les capteurs $C_T$ et $C_P$,

Le nombre de Reynolds Re est déterminé par la formule

$$Re = \frac{V_A \, D_H \rho}{\mu} \tag{1}$$

où $V_A$ est la vitesse équivalente d'écoulement du fluide, déterminée à partir de la mesure de la vitesse de rotation N, $D_H$ le diamètre hydraulique

$\rho$ et $\mu$ la densité et la viscosité du gaz test

La contrainte équivalente de cisaillement est définie par :

$$\tau = \frac{C_{dis}}{R_{moy} \, S_{moy}} \tag{2}$$

où $C_{dis}$, $R_{moy}$, $S_{moy}$ sont respectivement

- la valeur du couple correspondant aux pertes dissipatives de la zone d'essai obtenue par différence entre le couple correspondant à l'ensemble des pertes $C_{Tot}$ (valeur mesurée sur l'arbre) et les pertes extérieures à la zone annulaire $C_{nan}$ (zones périphériques, paliers, et étanchéité).
- le rayon moyen de l'entrefer,
- la surface développée par le rayon moyen de l'entrefer sur la hauteur de la zone d'essai.

Le coefficient de friction est défini par :

$$f = \frac{2 \, \tau}{\rho \, V_A^2} \tag{3}$$

Pour un nombre de Reynolds Re donné, à une valeur de rugosité $\varepsilon$ de surface ou de paroi étalon, on fait correspondre une valeur de couple, ou une valeur de contrainte de cisaillement ou une valeur de coefficient de friction. On établit un ensemble de couples de valeurs permettant d'établir une relation entre la rugosité mesurée sur la paroi étalon et l'un ou l'autre des paramètres précédents. La relation peut être donnée sous la forme d'un réseau de courbes, chaque courbe correspondant à une valeur Re donnée, dans un diagramme où l'abscisse correspond à la rugosité et l'ordonnée au paramètre choisi ou encore sous la forme d'une équation.

C'est cet ensemble de données qui va servir de base pour déterminer les caractéristiques hydrauliques d'une paroi à partir de mesures de couple comme il est décrit ci-après.

Dans le cas où l'on teste simultanément deux parois présentant des caractéristiques sensiblement identiques ou identiques, le réseau de courbes de référence sera établi en tenant compte des mesures de friction obtenues en équipant ce dispositif de parois étalons sur le tambour et sur la partie interne de l'enceinte et en suivant une démarche similaire à celle qui vient d'être exposée.

## Etape de mesure pour établir les caractéristiques hydrauliques de parois

Les parois étalons utilisées au cours de l'étape précédente sont remplacées par une ou deux parois disposées comme indiqué sur la figure 2.

Les essais sont effectués à une valeur de Reynolds pour laquelle un étalonnage en rugosité est disponible.

On mesure la vitesse de rotation et le couple à l'aide des dispositifs de mesure N et du couplemètre C.

La contrainte de cisaillement est obtenue par la formule (2), et le coefficient de friction par la formule (3).

A partir du nombre de Reynolds Re, du coefficient de friction et de l'ensemble de données préalablement construit (relation d'étalonnage en se référant soit à un ensemble de données relatif à une paroi , soit à un ensemble de données établi dans le cas d'un test sur deux parois identiques ou au moins sensiblement identiques, les parois étant disposées en vis à vis dans le dispositif de mesure), on en déduit la valeur du coefficient de rugosité hydraulique.

Ce paramètre permet de caractériser les propriétés aérodynamiques de la ou des parois testées.

Dans certains cas, les parois testées présentent une valeur du facteur de friction $f_s$, inférieure au coefficient de friction $f_L$ d'une paroi lisse constituée du matériau de référence.

Dans ce cas d'essais, par exemple de stries, on établit une valeur d'efficacité hydraulique de paroi par la formule suivante :

$$Eff = \frac{f_L}{f_S}$$

Avantageusement il est possible de tenir compte des pertes dissipatives pour déterminer les caractéristiques aérodynamiques d'une paroi.

Pour un dispositif équipé de moyens d'étanchéité tel que celui décrit à la figure 1, le couple $C_{dis}$ correspondant aux pertes dissipatives dans la zone annulaire peut alors être obtenu par différence entre le couple correspondant à l'ensemble des pertes $C_{Tot}$ (valeur mesurée sur l'arbre) et les pertes extérieures à la zone annulaire $C_{nan}$ (zones périphériques, paliers, et étanchéité). Les pertes $C_{nan}$ sont établies en alimentant les conduits 16 et 17 par le gaz d'essai, en maintenant la pression des zones 10b et 10c à la pression atmosphérique, en dépressurisant la zone 10a (pression par exemple d'un dixième de la pression atmosphérique) et en mesurant le couple transmis au tambour qui dans ce cas est approximativement égal à $C_{nan}$.

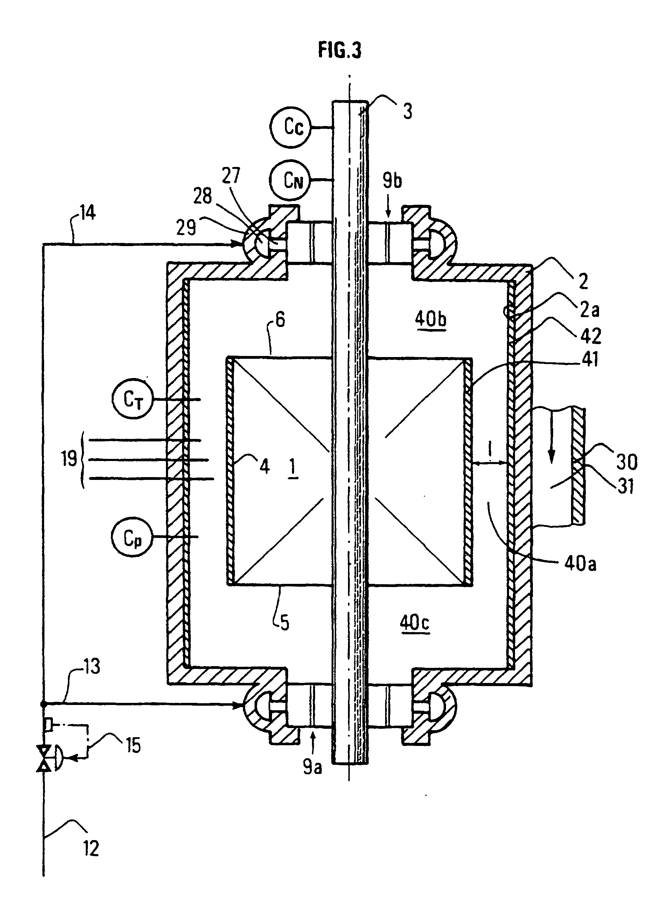

La figure 3 schématise une autre variante de réalisation du dispositif selon l'invention où les moyens d'étanchéités se trouvent disposés au niveau de l'arbre de rotation. Cette variante diffère principalement de celle décrite à la figure 1 du fait que les étanchéités ne séparent pas physiquement trois zones contrairement au dispositif décrit à la figure 1.

Dans ce cas, le dispositif comporte une seule zone d'essai 40a, 40b, 40c qui se trouve à la pression à laquelle est réalisée l'essai.

Les chemises ou parois à tester, référencées respectivement 41 et 42 sont montées sur la paroi externe cylindrique du tambour et sur la paroi interne de l'enceinte. Leur longueur correspond sensiblement à la hauteur du tambour et à la hauteur interne de l'enceinte 2.

Un exemple de mise en oeuvre de ce dispositif, ainsi que son étalonnage, reprend les étapes précédemment exposées en relation avec le dispositif de la figure 1. On tient compte uniquement de l'ensemble des pertes totales $C_{Tot}$ pour établir le ou les réseaux de courbe servant de base pour la comparaison et pour réaliser l'étalonnage du dispositif.

Les conduits d'évacuation 16 et 17 ne sont plus nécessaires dans cette variante, les fuites éventuelles du fluide test passant au niveau des étanchéités 9a et 9b situées au niveau de l'arbre de rotation.

En résumé les deux variantes présentées à titre illustratif et nullement limitatif se distinguent de la façon suivante

| Figure 1 | Figure 3 |
|---|---|
| les zones 10a, 10b et 10c sont séparées «physiquement» par les moyens d'étanchéité les zones 10b et 10c sont à la pression atmosphérique | les zones 40a, 40b et 40c ne sont pas séparées par les moyens d'étanchéité les zones 40b, 40c sont à la pression d'essai |
| la larguer des zones 10b et 10c est du même ordre de grandeur que la largeur de l'entrefer | la largeur des zones 40b et 40c est de l'ordre du rayon de l'enceinte |
| la longueur de la chemise 21 = différence entre la longueur du tambour et la hauteur des moyens d'étanchéité 9a, 9b | la longueur de la chemise 41 égale la hauteur du tambour |
| la longueur de la chemise 20 est égale à la longueur de la chemise 21 | la longueur de la chemise 42 est égale à la longueur de l'enceinte considérée selon l'axe de l'arbre de rotation |
| Le réseau de courbes est établi à partir de mesures des pertes dissipatives ; $C_{dis} = C_{Tot} - C_{nan}$ | le réseau de courbes est établi à partir des pertes dissipatives totales; $C_{dis} = C_{Tot}$ |

(suite)

| Figure 1 | Figure 3 |
|---|---|
| Les fuites du fluide test s'effectuent par les conduits 16 et 17 | les fuites du fluide test sont réalisées à travers les moyens d'étanchéité disposés au niveau de l'arbre de rotation |
| les anneaux de distribution du fluide test 29 sont montés sur le plus grand diamètre de l'enceinte | les anneaux de distribution du fluide test 29 sont montés sur les étanchéités disposées au niveau de l'arbre de rotation |

Avantageusement le dispositif peut aussi être pourvu de dispositifs tels que des tubes de pitot 19 permettant de déterminer le profil de vitesse du gaz sous pression en régime turbulent à l'intérieur de la zone annulaire ou zone d'essai 10a, 40a. Il est ainsi possible d'affiner la précision de calcul en remplaçant la valeur moyenne de la vitesse Va par une valeur représentative obtenue à partir du profil de vitesse mesuré.

Selon un mode de réalisation préférentiel, la zone d'essai 10a, 40a est cylindrique sur la plus grande partie de sa longueur, mais on peut sans sortir du cadre de l'invention utiliser un tambour et une enceinte présentant des surfaces de révolution quelconques.

Les dispositifs tels que décrits aux figures 1 à 3 peuvent être constitués d'éléments démontables (chemises) pouvant se monter sur la partie externe du tambour et/ou la partie interne de l'enceinte pour l'essai de parois.

Ces parois seront équipées de moyens connus de l'homme du métier pour maintenir en place le matériau, la ou les parois étudiées.

Le dispositif sera modulable, ainsi il sera possible de faire varier la valeur de la largeur d'entrefer en ajoutant un disque positionné autour du tambour. Ce disque pourra être fixé au niveau du tambour, ou de l'arbre de rotation.

Le dispositif selon l'invention permet avantageusement de déterminer des propriétés aérodynamiques de parois de la liste donnée ci-après à titre indicatif et nullement limitatif : des stries, des aspérités, une surface usinée, corrodée, revêtue, du gel ou du liquide en paroi, des singularités, .....

Le dispositif peut aussi être muni d'un conduit (non représenté sur les figures) permettant d'injecter des produits ou additifs pouvant se déposer sur la paroi et modifier les propriétés aérodynamiques de la paroi.

**Revendications**

1.    Dispositif pour déterminer des caractéristiques aérodynamiques d'au moins une paroi, comportant

- un arbre de rotation (3),
- un tambour (1) monté sur ledit arbre de rotation,
- une enceinte (2) à l'intérieur de laquelle se trouve disposée ledit tambour, de manière à définir un espace (10) comportant au moins une zone d'essai (10a ; 40a) munie de ladite au moins une paroi à tester,
- au moins un conduit (12) d'introduction d'un fluide test communiquant avec ladite zone d'essai (10a ; 40a),
- des dispositifs permettant de déterminer un paramètre représentatif du facteur de friction du fluide dans la zone d'essai (10a ; 40a),

**caractérisé en ce que**

- ladite zone d'essai (10a ; 40a) a une largeur d'entrefer (I) déterminée, pour une vitesse de rotation du tambour donnée et un fluide test ayant des caractéristiques connues, de manière à ce que ledit fluide se présente en régime d'écoulement turbulent au niveau de ladite au moins une paroi à tester, le régime turbulent correspondant à une valeur de Reynolds Re donnée.

2.    Dispositif selon la revendication 1, **caractérisé en ce que** le tambour (1) est cylindrique sur au moins une partie de sa hauteur.

3.    Dispositif selon une des revendications 1 ou 2, **caractérisé en ce qu'**il comporte des moyens d'étanchéité (9a, 9b) adaptés et disposés de manière à délimiter trois zones, une première zone d'essai (10a) haute pression et deux zones (10b, 10c) basse pression.

**4.** Dispositif selon la revendication 3, **caractérisé en ce que** au moins un des conduits (12, 13, 14) d'introduction du fluide test est disposé au niveau des moyens étanchéité (9a, 9b).

**5.** Dispositif selon la revendication 1, **caractérisé en ce qu'**il comporte des moyens d'étanchéité (9a, 9b) disposés au niveau de l'arbre de rotation.

**6.** Dispositif selon l'une des revendications 1 à 5, **caractérisé en ce qu'**il est équipé de moyens ($C_P$, $C_T$) permettant de déterminer la pression et/ ou la température au niveau de la zone d'essai (10a, 40a)

**7.** Dispositif selon l'une des revendications 1 à 5, **caractérisé en ce qu'**il comporte des capteurs, tels que des tubes de pitot (19), pour déterminer la vitesse locale du fluide et en déduire le profil de vitesse à l'intérieur de la zone annulaire (10a ; 40a).

**8.** Dispositif selon l'une des revendications 1 à 7, **caractérisé en ce qu'**il comporte un système de réchauffement et/ou de refroidissement.

**9.** Méthode permettant de déterminer des caractéristiques aérodynamiques d'une paroi **caractérisée en ce que** :

- on introduit un fluide test dans une zone d'essai comportant la ou les parois à tester, ladite zone d'essai étant située entre une enceinte fixe et un élément mobile,
- on met en rotation ledit élément mobile,
- on choisit la pression et la vitesse de rotation dudit élément mobile de façon à obtenir le nombre de Reynolds souhaité,
- on détermine les pertes dissipatives à l'intérieur de ladite enceinte,
- on détermine la contrainte de cisaillement ainsi que le facteur de friction,
- on compare la valeur de ladite contrainte de cisaillement ou celle du facteur de friction par rapport à un ensemble de données établies à partir de parois étalons pour une même valeur du nombre de Reynolds que celle choisie pour la caractérisation, et
- on détermine la valeur de la caractéristique hydraulique telle que la rugosité ε hydraulique ou l'efficacité hydraulique de la ou des parois testées.

**10.** Méthode selon la revendication 9, **caractérisée en ce que** l'on détermine les pertes dissipatives à l'intérieur de ladite enceinte au niveau d'une zone d'essai, délimitée par des moyens d'étanchéité (9a, 9b) disposés de manière à délimiter trois zones, une première zone d'essai (10a) et deux zones (10b, 10c).

**11.** Application du dispositif selon l'une des revendications 1 à 8 et de la méthode selon une des revendications 9 à 10 à l'étude de parois d'une conduite destinée au transport d'un gaz sous pression.

**Patentansprüche**

**1.** Vorrichtung zur Bestimmung der aerodynamischen Merkmale wenigstens einer Wand, umfassend

- wenigstens eine Rotationswelle (3),

- eine Trommel (1), die auf der Rotationswelle angebracht ist,

- eine Einfassung (2), in der sich die Trommel angeordnet befindet, derart dass sie einen Raum (10) definiert, der wenigstens eine Versuchszone (10a;40a), ausgerüstet mit der wenigstens einen zu testenden Wand, umfasst,

- wenigstens eine Leitung (12) zur Einführung eines Testfluids, die mit der Versuchszone (10a;40a) kommuniziert,

- Vorrichtungen, die es ermöglichen, einen Parameter zu bestimmen, der für den Reibungsfaktor des Fluids in der Versuchszone (10a;40a) repräsentativ ist,

**dadurch gekennzeichnet, dass**

- die Versuchszone (10a;40a) eine bestimmte Luftspaltbreite (I) für eine vorgegebene Rotationsgeschwindigkeit der Trommel hat und das Testfluid bekannte Merkmale derart hat, dass das Fluid im turbulenten Strömungsbereich auf der Ebene der wenigstens einen zu testenden Wand vorliegt, wobei der turbulente Bereich einem vorgegebenem Reynolds-Wert Re entspricht.

2. Vorrichtung nach Anspruch 1, **dadurch gekennzeichnet, dass** die Trommel (1) über wenigstens einen Teil ihrer Höhe zylindrisch ist.

3. Vorrichtung nach einem der Ansprüche 1 oder 2, **dadurch gekennzeichnet, dass** sie Dichtungsmittel (9a,9b) umfasst, die derart ausgelegt und angeordnet sind, dass sie drei Zonen begrenzen, eine erste Versuchszone (10a) hohen Drucks und zwei Zonen (10b, 10c) niedrigen Drucks.

4. Vorrichtung nach Anspruch 3, **dadurch gekennzeichnet, dass** wenigstens eine der Leitungen (12,13,14) zur Einführung des Testfluids auf der Ebene der Dichtungsmittel (9a,9b) angeordnet ist.

5. Vorrichtung nach Anspruch 1, **dadurch gekennzeichnet, dass** sie Dichtungsmittel (9a,9b) umfasst, die auf der Ebene der Rotationswelle angeordnet sind.

6. Vorrichtung nach einem der Ansprüche 1 bis 5, **dadurch gekennzeichnet, dass** sie mit Mitteln ($C_\rho$,$C_\gamma$) ausgerüstet ist, die es ermöglichen, den Druck und/oder die Temperatur auf der Ebene der Versuchszone (10a,40a) zu bestimmen.

7. Vorrichtung nach einem der Ansprüche 1 bis 5, **dadurch gekennzeichnet, dass** sie Sensoren wie Pitotrohre (19) umfasst, um die lokale Geschwindigkeit des Fluids zu bestimmen und daraus das Geschwindigkeitsprofil in der ringförmigen Zone (10a;40a) abzuleiten.

8. Vorrichtung nach einem der Ansprüche 1 bis 7, **dadurch gekennzeichnet, dass** sie ein Heiz- und/oder Kühlsystem umfasst.

9. Verfahren, das es ermöglicht, die aerodynamischen Merkmale einer Wand zu bestimmen, **dadurch gekennzeichnet, dass**:

- man ein Testfluid in eine Versuchszone einführt, die die zu testende Wand oder die zu testenden Wände umfasst, wobei die Versuchszone zwischen einer feststehenden Einfassung und einem beweglichen Element gelegen ist,

- man das bewegliche Element in Rotation versetzt,

- man den Druck und die Rotationsgeschwindigkeit des beweglichen Elements derart wählt, dass die gewünschte Reynolds-Zahl erhalten wird,

- man die Dissipationsverluste in der Einfassung bestimmt,

- man die Schubspannung sowie den Reibungsfaktor bestimmt,

- man den Wert der Schubspannung oder jenen des Reibungsfaktors im Verhältnis zu einer Datengesamtheit vergleicht, die aus Vergleichswänden für einen gleichen Wert der Reynolds-Zahl etabliert sind, wie jenen, den man für die Charakterisierung wählt, und

- man den Wert der hydraulischen Charakteristik wie der Rauheit und Hydraulik oder der hydraulischen Effizienz der zutestenden Wand oder Wände bestimmt.

10. Verfahren nach Anspruch 9, **dadurch gekennzeichnet, dass** man die Dissipationsverluste in der Einfassung auf der Ebene der Versuchszone bestimmt, die durch Dichtmittel (9a,9b) begrenzt ist, die derart angeordnet sind, dass sie drei Zonen begrenzen, eine erste Versuchszone (10a) und zwei Zonen (10b,10c).

11. Verwendung einer Vorrichtung nach einem der Ansprüche 1 bis 8 und des Verfahrens nach einem der Ansprüche 9 bis 10 zur Untersuchung von Wänden einer Leitung, die zur Beförderung eines Druckgases vorgesehen ist.

**Claims**

1.  A device for determining aerodynamic characteristics of at least a wall, comprising :

    -   a shaft (3),

    -   a drum (1) mounted on said shaft,

    -   an enclosure (2) in which said drum is positioned so as to define a space (10) and at least one test zone (10a; 40a) comprising at least a wall to be tested,

    -   at least one test fluid delivery line (12) communicating with said test zone (10a; 40a),

    -   devices allowing to determine a parameter representative of the friction factor of the fluid in test zone (10a; 40a),

        **characterized in that** :

    -   said test zone (10a; 40a) has a determined gap width "I", for a given rotating speed of the drum and a test fluid having known characteristics, so that said fluid is on turbulent flow in the neighbourhood of the at least wall to be tested, the turbulent flow corresponding to a given Reynolds number Re.

2.  A device as claimed in claim 1, **characterized in that** drum (1) is cylindrical over at least part of its height.

3.  A device as claimed in any one of claims 1 or 2, **characterized in that** it comprises suitable seal means (9a, 9b) arranged so as to delimit three zones, a first highpressure test zone (10a) and two low-pressure zones (10b, 10c).

4.  A device as claimed in claim 3, **characterized in that** at least one of test fluid delivery lines (12, 13, 14) is situated in the neighbourhood of seal means (9a, 9b).

5.  A device as claimed in claim 1, **characterized in that** it comprises seal means (9a, 9b) situated in the neighbourhood of the shaft.

6.  A device as claimed in any one of claims 1 to 5, **characterized in that** it is equipped with means ($C_P$, $C_T$) allowing to determine the pressure and/or the temperature in the neighbourhood of test zone (10a; 40a).

7.  A device as claimed in any one of claims 1 to 5, **characterized in that** it comprises detectors, such as Pitot tubes (19), for determining the local velocity of the fluid and for deducing the velocity profile in annular zone (10a; 40a).

8.  A device as claimed in any one of claims 1 to 7, **characterized in that** it comprises a heating and/or cooling system.

9.  A method allowing to determine aerodynamic characteristics of a wall, **characterized in that** :

    -   a test fluid is introduced in a test zone comprising the wall(s) to be tested, said test zone being situated between a stationary enclosure and a mobile element,

    -   said mobile element is rotated,

    -   the pressure and the rotating speed of said mobile element are selected so as to obtain the desired Reynolds number,

    -   the dissipative losses are determined in said enclosure,

    -   the shear stress and the friction factor are determined,

    -   the value of said shear stress or that of the friction factor are compared in relation to a set of data established from reference walls for the same Reynolds number as that selected for its characterization, and

    -   the value of the hydraulic characteristic, such as the hydraulic roughness $\varepsilon$ or the hydraulic efficiency of the wall(s) tested, is determined.

10. A method as claimed in claim 9, **characterized in that** the dissipative losses are determined in said enclosure in the neighbourhood of a test zone delimited by seal means (9a, 9b) arranged so as to delimit three zones, a first test zone (10a) and two zones (10b, 10c).

11. Application of the device as claimed in any one of claims 1 to 8 and of the method as claimed in any one of claims 9 to 10 to the study of walls of a pipe used for carrying a pressurized gas.

**FIG.1**

**FIG.2**

## FIG.3